# EUROPEAN PATENT APPLICATION

(11) **EP 3 875 264 A1**
(43) Date of publication of application: **08.09.2021**
(21) Application number: 20160313.1
(22) Date of filing: 02.03.2020
(51) Int. Cl.: B32B 3/04, B32B 7/06, B32B 27/08, B32B 27/28, B32B 27/30, B32B 27/32, B32B 27/36

(54) **FILM FOR PACKAGING APPLICATIONS AND EASY-TO-OPEN PACKAGES OBTAINED THEREWITH**

(71) Applicant: Cryovac, LLC, Charlotte, NC 28208 (US)
(72) Inventor: Riccio, Marina, 20152 Milan (IT); Della Bianca, Serena, 20017 Rho (IT)
(74) Representative: Di Fiore, Simona

(57) **Abstract**

The present invention relates to a multilayer, coextruded film suitable as a bottom web for vacuum skin packaging applications and to easy-to-open vacuum skin packages obtained using said film as the bottom web. Advantageously, this film does not require oxydry powders to prevent sticking when wound in a roll.

## Description

### Technical Field

The present invention relates to a thermoplastic film for packaging, preferably to a thermoplastic film suitable for use as a bottom web for vacuum skin packaging applications, and to an easy-to-open package obtained using said film, preferably to a vacuum skin package obtained using said film as the bottom web. The preferred VSP package is suitable for the presentation and preservation of a food product and for use in cooking, re-heating and/or thawing of the packaged food product in a microwave oven.

Advantageously, the film of the invention does not require anti-sticking agents be applied onto the outer surfaces to prevent sticking when the film is wound in rolls.

### Background Art

Thermoplastic films have long been used in packaging applications.

Among several packaging methods, vacuum skin packaging (hereinafter VSP) is a process well known in the art which uses thermoplastic packaging webs to enclose a food product. The vacuum skin packaging process is a type of thermoforming process in which an article to be packaged serves as the mold for a forming web.

An article is first placed on a rigid, semi-rigid or flexible bottom support, that can be flat or shaped, e.g., tray-shaped, bowl-shaped or cup-shaped (also called "bottom" or "lower" web), and the supported article is then passed to a chamber where a "top" or "upper" web is first drawn upward against a heated dome and then draped down over the article. The movement of the top web is controlled by vacuum and/or air pressure, and in a vacuum skin packaging arrangement, the interior of the container is vacuumized before final welding of the top web to the bottom film. The distinguishing feature of a vacuum skin package is that the top heated film forms a tight skin around the article and is sealed to the whole surface of the bottom support not covered by the article while in the thermoforming process, the top thermoplastic film is only sealed to the flange-like edges or rim of the bottom support by using heated sealing bars or similar equipment.

Vacuum skin packaging has become an increasingly attractive way of packaging several kinds of food, in particular fresh red meats. The final package presents a tight fitting, clear package, which protects the food article from the external environment. Other advantages of vacuum skin packages are longer shelf life, absence of drip loss (i.e. in case of fresh or processed meat, no purge is formed) and in general visual appeal which is appreciated by the consumer.

Vacuum skin packaging is increasingly being used also for the packaging of so-called "ready-meals", i.e. food products that only require thawing and/or re-heating to be ready for consumption.

A highly desirable feature in a package, regardless of the product or application, but in particular in a VSP package, is the ease of opening. In order to avoid the use of sharp tools, such as knives or scissors, to open the package, packages have been developed which can be manually opened by the consumer by pulling apart the top and the bottom, normally starting from a corner of the package where the top web has purposely not been sealed to the bottom support. Packages that can be opened in this way are called "easy-to-open" or "EZO" packages.

An EZO packaging mechanism is based on cohesive failure. In this case, the easy opening of the package is achieved by internal rupture of a layer of one of the webs that, during opening of the package, breaks along a plane parallel to the layer itself. This occurs when the components of the layer undergoing rupture are only partially compatible, such that cohesion among them fails when a transverse force is applied (i.e. during packaging opening) and the layer internally breaks. The mixture of partially compatible components is generally called "cohesive failure blend" or "frangible blend" and the layer undergoing rupture is called "cohesive failure layer" or "frangible layer".

Frangible blends are known and described for instance in EP1084186A1, which discloses a thermoplastic web whose sealing layer or a layer adjacent to the sealing layer comprises a ternary blend of (i) a copolymer of ethylene and acrylic acid or methacrylic acid, (ii) a modified EVA copolymer, and (iii) a polybutylene. This layer cohesively fails and ruptures internally even when a transverse force lower than 6.00 N / 25.4 mm is applied.

Furthermore, frangible binary blends are disclosed for instance in EP192131B1, which describes an easy-to-open package with a bottom web seal layer comprising a binary blend of an ionomer and a modified ethylene/vinyl acetate copolymer. Nowadays, the market requires more sustainable and recyclable films, in particular for VSP applications more sustainable and recyclable bottom webs. In this respect, polyester mono or multilayer bottom webs are preferred, especially PET-based webs. Such films may in fact incorporate high amount of recycled resins and can result recyclable as well. In order to ensure the sealability of PET based webs with most commercial top webs, ethylene vinyl acetate copolymer (EVA) is usually used as sealant layer.

However, the Applicant has noted that when such webs are wound up in a roll, the EVA sealant layer of a spire tends to stick to the outer PET surface of the adjacent spire and that the same problem may occur if the outer layer is made of styrene-based polymers, cyclo-olefin copolymers, poly-lactic acids and mixtures thereof.

When these films having an EVA sealant layer and an outer layer made of one of the polymer listed above also comprise a "frangible" EZO inner layer, the sticking between the EVA sealant layer and the outer layer in two adjacent spires may result in serious damages to the film upon unwinding.

In fact, the Applicant observed that when these films are wound to form rolls and the rolls are stored, the sticking between the spires might be so high that the force needed to unwind the film causes the rupture of the frangible layer. Under these circumstances, the unwound film results so damaged that it can no longer be used for packaging applications.

Up to now, the only available solution to this drawback has been the use of anti-sticking materials, such as carbohydrate powders known as oxydry, which are typically applied onto the sealant surface of the film before it is rolled up. While this treatment is effective to avoid sticking, thus preserving the frangible layer intact upon unwinding, the use of the oxydry powders brings some inconveniences. First, its use generates additional costs and requires additional working time. Secondly, as oxydry materials are in the form of powders, they are volatile and make it difficult to keep the working environment clean and safe, both where the film is produced and wound in rolls and where the film is unwound and used for packaging applications.

Another problem is represented by the difficulty in dosing the powder and assuring that it is homogeneously spread onto the film surface. Moreover, the oxydry is responsible for machinability issues when the film is used for packaging applications. Finally, oxydry is also critical for reel stability, as it may cause the "telescoping effect" of the rolls, which lose their compact shape during the unrolling phase on the packaging machine.

Accordingly, it would be preferable to have a solution to the stickiness of these films other than oxydry powders.

EP 2156949 B1 discloses a film suitable for VSP packaging comprising a first sealant layer and a second layer, adjacent to the sealant layer, which consists of a frangible blend. The outer layer of this film may be made of different polymers but, in the films of the examples, it is always made of polypropylene.

This document does not mention the problem of stickiness of the film when wound up in rolls. According to the examples, the films are used as liners, which are heat laminated to rigid polypropylene bottom flat webs and then are directly subjected to thermoforming to get rigid polypropylene trays, without any mention of intermediate winding of the films in rolls.

In conclusion, there is still the need for films, in particular for VSP bottom films, with an inner EZO frangible layer that do not require the use of an oxydry powder to avoid the sticking issues and to prevent the break of the frangible layer when unwound from the rolls.

### Summary of the Invention

The Applicant has surprisingly found that the problem of structural stability of certain films, in particular of certain VSP bottom films upon unwinding from reels - said films comprising an inner EZO frangible layer and a second outer layer made of certain polymers - can be overcome without the use of oxydry powders by changing the composition of the sealant layer and by incorporating a high content of stiff polymers within the film.

Under these conditions, the force needed to separate the sticking surfaces in the reel is lower than the force required to break the inner EZO frangible layer, thus allowing the smooth unwinding of the film without any internal rupture.

Accordingly, an object of the invention is a multilayer film for packaging, which comprises
1) a first outer sealant layer, consisting essentially of
   - from 10 to 100 wt% of at least an ethylene polymer, at least a propylene polymer or a mixture thereof,
   - from 0 to 90 wt% of at least an ethylene (meth)acrylate copolymer, at least an ethylene (meth)acrylic acid copolymer or a mixture thereof, all the weight percentages being referred to the weight of the first outer sealant layer;
2) an inner frangible layer consisting of a frangible polymer blend,
3) a second outer layer comprising at least 80 wt% of at least a stiff polymer, wherein the stiff polymer is a thermoplastic polymer characterized by a flexural modulus at 23°C of at least 1.5 GPa measured according to ASTM D790, and
optionally, one or more further inner layers,
wherein the total thickness of the layer(s) of the film comprising said at least a stiff polymer, is at least 60% of the total thickness of the film.

A further object of the present invention is a roll made of the multilayer film according to the invention.

A further object of the present invention is a thermoformed support comprising, preferably consisting of, the multilayer film according to the invention, wherein the sealant layer of the film is the internal surface of the support.

Typically, the thermoformed support is a container, for example a tray.

A further object of the present invention is a VSP package comprising a bottom web, a top web sealed to the sealant layer of the bottom web and a product enclosed between said top and bottom webs, characterized in that the bottom web comprises, preferably consists of, the multilayer film according to the invention. Preferably, the bottom web may be a thermoformed support according to the invention.

When used as the bottom web in a VSP package, the film of the invention allows to manufacture a package that is easy-to-open thanks to the presence of the inner, frangible layer, and it is also free of defects upon opening, such as fringes or angel hairs.

### Definitions

As used herein, the term "film" is used to refer to a plastic web, regardless of whether it is a film or a sheet. Films of and used in the present invention may have a thickness of up to 2 mm or more.

As used herein, the expressions "inner layer" and "internal layer" refer to a layer of the film having both of its principal surfaces directly adhered to another layer of the film.

As used herein, the expressions "outer layer" or "external layer" refer to a layer of the film having only one of its principal surfaces directly adhered to another layer of the film.

As used herein, the phrases "adheres" or "directly adheres", as applied to layers, refers to adhesion of the subject layer to the object layer by direct contact with each other, without a tie layer, an adhesive, or other layer therebetween.

In contrast, as used herein, the word "between", as applied to a layer expressed as being between two other specified layers, includes both direct adherence of the subject layer to the two other layers it is between, as well as lack of direct adherence to either or both of the two other layers the subject layer is between, i.e., one or more additional layers can be imposed between the subject layer and one or more of the layers the subject layer is between.

As used herein, the phrases "sealant layer" or "heat-sealable layer", and the like refer to the outer layer of the film, which is involved in the heat-sealing of the film to itself, to another film or to another article, which is not a film, e.g. a container.

As used herein, the term "seal" or "heat-seal" refers to any seal of a first region of a film surface to a second region of a film surface, wherein the seal is formed by heating the regions to at least their respective seal initiation temperatures. The heating can be performed according to different techniques, such as using a heated bar, hot air, infrared radiation, contact with a heated surface etc, as it is known in the art.

As used herein, "seal strength" indicates the strength of the seal between the top web and the bottom web in a VSP package. The seal strength can be measured for example following ASTM F-88 or by using the test method reported in the Experimental part.

As used herein, the phrase "consists essentially of" or "consisting essentially of" one or more resins, referred to a layer of the film, means that such layer comprises at least 95%, preferably at least 97%, more preferably at least 98% by weight of such one or more resins, in respect of the layer total weight.

The term "ethylene polymer" is used herein to refer to ethylene homopolymers and ethylene/alphaolefin copolymers.

"Ethylene homopolymers" refers to polymers made of repeated units of ethylene monomers (polyethylene, PE), and includes high-density polyethylene (HDPE) and low-density polyethylene (LDPE).

Ethylene/alpha-olefin copolymers generally include copolymers of ethylene and one or more comonomers selected from alpha-olefins having from 3 to 12 carbon atoms, such as propylene, 1-butene, 1-pentene, 1-hexene, 1-octene, 4-methyl-1-pentene and the like. Ethylene/alpha-olefin copolymers generally have a density in the range of from 0.86 to 0.94 g/cm³.

The term linear low-density polyethylene (LLDPE) is generally understood to include that group of ethylene/alpha-olefin copolymers that fall into the density range of 0.915 to 0.94 g/cm³ and particularly 0.915 to 0.925 g/cm³. Sometimes linear polyethylene in the density range from 0.926 to 0.94 g/cm³ is referred to as linear medium density polyethylene (LMDPE). Lower density ethylene/alpha-olefin copolymers may be referred to as very low-density polyethylene (VLDPE) and ultra-low density polyethylene (ULDPE). Ethylene/alpha-olefin copolymers may be obtained by either heterogeneous or homogeneous polymerization processes.

The term "propylene polymer" is used herein to refer to propylene homopolymers and propylene copolymers. "Propylene homopolymers" refers to polymers made of repeated units of propylene monomers (polypropylene, PP). "Propylene copolymers" encompasses propylene/ethylene copolymers (EPC), which are copolymers of propylene and ethylene wherein a major amount of the polymer is propylene, propylene/ethylene/butene terpolymers (EPB) and propylene/alpha-olefin copolymers. Propylene/alpha-olefin copolymers generally include copolymers of propylene and one or more comonomers selected from alpha-olefins having from 3 to 12 carbon atoms, such as propylene, 1-butene, 1-pentene, 1-hexene, 1-octene, 4-methyl-1-pentene and the like.

As used herein, the term "ethylene (meth)acrylate copolymer or ethylene (meth)acrylic acid copolymer" refers to a copolymer of ethylene with (meth)acrylate esters or (meth)acrylic acid.

As used herein, the term "copolymer of ethylene with (meth)acrylate esters" refers to a copolymer of ethylene with methacrylate or acrylate esters. For example, the term includes ethylene-ethyl (meth)acrylate co-polymer, ethylene-butyl (meth)acrylate co-polymer, ethylene-methyl (meth)acrylate co-polymer and the like. The copolymer typically contains between 15 to 40%, preferably between 20 and 30% by weight of acrylate or methacrylate units.

The expressions "(meth) acrylic acid" and "(meth) acrylate" are used herein to mean acrylic acid and/or methacrylic acid and acrylate and/or methacrylate, respectively.

As used herein, the term "ethylene (meth)acrylic acid copolymer" refers to a copolymer of ethylene with acrylic or methacrylic acid.

The copolymer typically contains from 4 to 18% by weight of acrylic or methacrylic acid units. Said copolymer can also contain, copolymerised therein, an alkyl (meth)acrylate, such as n-butyl acrylate or methacrylate or isobutyl acrylate or methacrylate.

The term "EMA" is generally used to indicate a copolymer of ethylene and methacrylates.

The term "EAA" is generally used to indicate a copolymer of ethylene and acrylic acid.

The term "EMAA" is generally used to indicate a copolymer of ethylene and methacrylic acid. Ethylene/(meth)acrylic acid copolymers suitable for use in the present invention are commercially available from DuPont under the trademark Nucrel®, e.g., Nucrel® 1202, Nucrel® 1302 or under the trademark Elvaloy®, e.g. Elvaloy® 1214AC or from Dow Chemicals under the trademark Primacor®, e.g. Primacor®1410.

As used herein, the term "modified" refers to a polymer modified with an anhydride functionality, either grafted onto the polymer or copolymerised therewith. The anhydride functionality can be an anhydride of maleic acid, crotonic acid, citraconic acid, itaconic acid, fumaric acid, etc., and is inclusive of derivatives of such functionalities, such as acids, esters, and metal salts derived therefrom.

In particular, "anhydride modified ethylene (methyl)acrylate copolymer" refers to such polymers having an anhydride functionality associated therewith, either grafted onto the polymer or copolymerised therewith.

The expressions "neutralized ethylene/(meth)acrylic acid copolymer", or "ionomer", refer to a copolymer of ethylene and acrylic and/or methacrylic acid having the carboxylic acid neutralized by a metal ion, such as zinc or, preferably, sodium. Typically, neutralized ethylene/(meth)acrylic acid copolymers include at least 60 % by weight, preferably at least 70 % by weight and more preferably at least 80 % by weight of ethylene units. Neutralized ethylene/(meth)acrylic acid copolymers include those in which the metal ions are present in an amount to neutralize from 15 to 60 % of the acid groups of the polymer. Neutralized ethylene/(meth)acrylic acid copolymers suitable for use in the present invention are commercially available from DuPont under the trademark Surlyn®, e.g., Surlyn® 1601, Surlyn® 1652, Surlyn® 1650, Surlyn® 1705-1, Surlyn® 1901 or Surlyn® 2601 or from ExxonMobil under the trademark Iotek®, e.g. Iotek® 3110.

As used herein, the term "stiff polymer(s)" refers to thermoplastic polymers characterized by a flexural modulus at 23°C of at least 1.5 GPa measured according to ASTM D790 preferably selected form the group consisting of polyesters, styrene-based polymers, cyclo- olefin copolymers, poly-lactic acids and mixtures thereof. The flexural modulus can also be measured, with the same results, according to the method ISO 178.

As used herein, the term "polyesters" refers to polymers obtainable by polycondensation of dicarboxylic acids with dihydroxy alcohols or by polycondensation of hydroxy acids or of lactones. Suitable dicarboxylic acids are, for instance, terephthalic acid, isophthalic acid, 2,6-naphthalene dicarboxylic acid and the like. Suitable dihydroxy alcohols are for instance ethylene glycol, diethylene glycol, 1,4-butanediol, 1,4-cyclohexanedimethanol and the like.

Examples of useful polyesters include poly(ethylene 2,6-naphtalate), poly(ethylene terephthalate), and copolyesters obtained by reacting one or more dicarboxylic acids with one or more dihydroxy alcohols, such as PETG which is an amorphous co-polyesters of terephthalic acid with ethylene glycol and 1,4-cyclohexanedimethanol.

As used herein, the phrase "styrene-based polymer" refers to homopolymers and to copolymers of styrene, such as preferably polystyrene, styrene-ethylene-butylene-styrene copolymer, styrene-butadiene-styrene copolymer, styrene-isoprene-styrene copolymer, styrene-ethylene-butadienestyrene copolymer, and styrene-(ethylene-propylene rubber)-styrene copolymer. As used herein the use of a "dash" (i.e., the "-") in a styrene-based polymer formula, is inclusive of both block copolymers and random copolymers. More particularly, the phrase "styrene-based polymer" includes both copolymers in which (i) all named monomers are present as a block, or (ii) any subset of the named monomers are present as a block with the remaining monomers being randomly arranged, or (iii) all named monomers are randomly arranged.

The term "polystyrene" as used herein refers to film grade homopolymers of styrene. The term "polystyrene polymer" is used to identify single homopolymers or blends of different polystyrene homopolymers.

The term "styrene-based polymer" is broader as it includes homo and copolymers of styrene analogs and homologs, including -methyl-styrenes and ring-substituted styrenes, such as for instance ring-methylated styrenes.

As used herein, the term "Cyclo-olefin copolymers (COC)" refers to copolymers produced by copolymerization of cyclo-olefins such as norbornene or cyclopentadiene with ethylene using a metallocene catalyst. Typically, cyclo-olefin copolymers are amorphous, transparent thermoplastic materials.

As used herein, the term "Poly-lactic acids (PLA)" refers to polymers containing repeating units of lactic acid.

As used herein, the phrase "a thermoplastic film suitable for use as a bottom web in vacuum skin packaging" and the like refer to a thermoplastic film which is suitable for use in a VSP process, namely a film which can stand thermoforming in the packaging machine without undergoing perforations and excessive softening and, afterwards, can tightly adhere to the surface of the top web.

As used herein, the term "extrusion" is used with reference to the process of forming continuous shapes by forcing a molten plastic material through a die, followed by cooling. Immediately prior to extrusion through the die, the relatively high viscosity polymeric material is fed into a rotating screw of variable pitch, i.e., an extruder, which forces the polymeric material through the die.

As used herein, the term "coextrusion" refers to the process of extruding two or more materials through a single die with two or more orifices arranged so that the extrudates merge and weld together into a laminar structure before chilling, i.e. quenching.

As used herein, the term "orientation" refers to the "solid state orientation", namely to the process of stretching of the cast film carried out at a temperature higher than the Tg (glass transition temperatures) of all the resins making up the layers of the structure and lower than the temperature at which all the resins making up the layers of the structure are in the molten state. The solid-state orientation may be mono-axial, transverse or, preferably, longitudinal, or, preferably, bi-axial.

The phrase "orientation ratio in machine (or longitudinal) direction or in transverse direction" refers to the number of times the film has been oriented in that direction in relation to its original size. For example, if a film has been oriented to three times its original size in the longitudinal direction, the orientation ratio in longitudinal direction is 3:1.

As used herein, the phrases "longitudinal direction" or "machine direction", refer to a direction "along the length" of the film, i.e., in the direction of the film as the film is formed during coextrusion.

As used herein, the phrase "transverse direction", refers to a direction across the film, perpendicular to the machine or longitudinal direction.

As used herein the phrases "heat-shrinkable," "heat-shrink," and the like, refer to the tendency of the solid-state oriented film to shrink upon the application of heat, such that the size of the film decreases while the film is in an unrestrained state.

As used herein, the term "support" refers to any object suitable for supporting and possibly containing a product. The support may be flat or shaped and may be rigid, semi-rigid or flexible. Suitable examples of supports are, for instance, a tray, a bowl, a dish, a box, a flat support. In particular, the term "bottom support" means the bottom part of the VSP package onto which the article is accommodated and onto which the top film is sealed for the part that is not covered by the article.

As used herein the terms "easy-to-open" or "EZO" or "easy opening" blend or layer relate to a polymer blend or to a layer comprising said polymer blend which easily fails when contrary forces are applied to.

As used herein, the term "easy-to-open package", "EZO package" or "easy opening package" mean a package requiring an opening force, measured according to the method described in the Experimental part, of from 150 to 900 g/2.54 cm, preferably 200 to 800 g/2.54 cm, even more preferably 250 to 700 g/2.54 cm.

As used herein, the phrase "cohesive failure" or "frangible" refers to any system where the easy opening feature is achieved by internal rupture of a layer, which during opening of the package breaks along a plane parallel to the layer itself.

As used herein, the terms "cohesive failure blend" or "frangible blend" relate to a blend of polymers having a different chemical nature. The polymers are only partially compatible and consequently the material fails when a transverse force is applied to.

As used herein, the terms "compatible or incompatible" when referred to polymers mean miscible or immiscible polymers, namely they refer to polymers that when admixed result or do not result in a single phase respectively.

As used herein, the phrase "chemically or physically incompatible polymers" refers to immiscible resins which when admixed do not result in a single phase or in a homogeneous system because of low chemical affinity - due for instance to the different polarity of the monomers- and/or low physical affinity - due for instance to different morphology of the two material in their solid state.

Immiscible polymers, when blended or melted together, result in a system of (at least) two phases, which are generally observable under electron microscope, wherein the minority polymer(s) remains dispersed, e.g. in the form of islet or droplets, within the matrix of the majority polymer(s).

The scarce reciprocal affinity of immiscible polymers in a blend is the very reason for the failure of the layer comprising the frangible blend when contrasting forces are applied to it.

As used herein, the term "anti-sticking powder" refers to a powder typically used in the art of packaging films to avoid their sticking when wound in rolls. Anti-sticking powders are for instance XLD-35 or 5000E by Archem PRS Ltd.

### Detailed description of invention

An object of the present invention is a packaging multilayer film, which comprises
1) a first outer sealant layer, consisting essentially of
   - from 10 to 100 wt% of at least an ethylene polymer, at least a propylene polymer or a mixture thereof,
   - from 0 to 90 wt% of at least an ethylene (meth)acrylate copolymer, at least an ethylene (meth)acrylic acid copolymer or a mixture thereof,
   all the weight percentages being referred to the weight of the first outer sealant layer;
2) an inner frangible layer consisting of a frangible polymer blend,
3) a second outer layer comprising at least 80 wt% of at least a stiff polymer, wherein the stiff polymer is a thermoplastic polymer characterized by a flexural modulus at 23°C of at least 1.5 GPa measured according to ASTM D790, ,and,
optionally, one or more further inner layers,
wherein the total thickness of the layer(s) of the film comprising said at least a stiff polymer, is at least 60% of the total thickness of the film.

The first outer layer 1) of the film according to the invention is the sealant layer, which consists essentially of an ethylene polymer, a propylene polymer, or a mixture thereof, and optionally, at least an ethylene (meth)acrylate copolymer, an ethylene (meth)acrylic acid copolymer or a mixture thereof.

In one embodiment, the outer sealant layer 1) consists of at least one ethylene polymer, at least one propylene polymer, or a mixture thereof.

In one embodiment, the at least one ethylene polymer is an ethylene homopolymer.

In one embodiment, the at least one ethylene polymer is an ethylene/alpha-olefin copolymer, preferably a linear low-density polyethylene (LLDPE).

In one embodiment, the at least one propylene polymer is a propylene homopolymer.

In one embodiment, the at least one propylene polymer is a propylene/alpha-olefin copolymer.

In one embodiment, the at least one propylene polymer is a propylene/ethylene copolymer (EPC), wherein the copolymer contains a major amount of propylene and a minor amount of ethylene.

In one embodiment, the at least one propylene polymer is a propylene/ethylene/butene terpolymer (EPB), i.e. a copolymer of propylene, ethylene and 1-butene.

In another embodiment, the outer sealant layer 1) also comprises at least an ethylene (meth)acrylate copolymer and/or at least an ethylene (meth)acrylic acid copolymer.

Within this embodiment, layer 1) consists essentially of from 10 wt% to less than 100 wt% of at least one ethylene polymer, or at least one propylene polymer, or a mixture thereof, as disclosed above, and from more than 0 wt% to 90 wt% of one or more ethylene (meth)acrylate and/or ethylene (meth)acrylic acid copolymers.

In one embodiment, the outer sealant layer 1) consists essentially of from 15 to 95 wt.%, preferably from 20 to 90 wt.%, more preferably from 25 to 80 wt.%, even more preferably from 30 to 75 wt.% or from 40 to 60 wt% of at least one ethylene polymer or at least one propylene polymer, or a mixture thereof and from 5 to 85 wt.%, preferably from 10 to 80 wt.%, more preferably from 20 to 75 wt.%, even more preferably from 25 to 70 wt.% or from 40 to 60 wt% of one or more copolymers of ethylene with (meth)acrylate and/or with (meth)acrylic acid.

In one embodiment, the outer sealant layer 1) consists essentially of from 15 to 95 wt.% of at least one ethylene polymer or at least one propylene polymer, or a mixture thereof and from 85 to 5 wt.% of one or more copolymers of ethylene with (meth)acrylate and/or with (meth)acrylic acid.

In one embodiment, the outer sealant layer 1) consists essentially of from 20 to 90 wt.% of at least one ethylene polymer or at least one propylene polymer, or a mixture thereof and from 80 to 10 wt.%, of one or more copolymers of ethylene with (meth)acrylate and/or with (meth)acrylic acid.

In one embodiment, the outer sealant layer 1) consists essentially of from 25 to 80 wt.% of at least one ethylene polymer or at least one propylene polymer, or a mixture thereof and from 75 to 20 wt.% of one or more copolymers of ethylene with (meth)acrylate and/or with (meth)acrylic acid.

In one embodiment, the outer sealant layer 1) consists essentially of from 30 to 75 wt.% of at least one ethylene polymer or at least one propylene polymer, or a mixture thereof and from 70 to 25 wt.% of one or more copolymers of ethylene with (meth)acrylate and/or with (meth)acrylic acid.

In one embodiment, the outer sealant layer 1) consists essentially of from 40 to 60 wt% of at least one ethylene polymer or at least one propylene polymer, or a mixture thereof and from 60 to 40 wt.% of one or more copolymers of ethylene with (meth)acrylate and/or with (meth)acrylic acid.

In a preferred embodiment, said outer sealant layer 1) consists of from 15 to 95 wt.%, preferably from 20 to 90 wt.%, more preferably from 25 to 80 wt.%, even more preferably from 30 to 75 wt.% or from 40 to 60 wt% of at least one ethylene polymer, or at least one propylene polymer, or a mixture thereof and from 5 to 85 wt.%, preferably from 10 to 80 wt.%, more preferably from 20 to 75 wt.%, even more preferably from 25 to 70 wt.% or from 40 to 60 wt% of one or more ethylene (meth)acrylate or ethylene (meth)acrylic acid copolymers.

In one embodiment, said ethylene (meth)acrylate (EMA) or ethylene (meth)acrylic acid (EMAA) copolymer is preferably an ethylene (meth)acrylic acid copolymer (EMAA).

Examples of suitable ethylene (meth)acrylic acid copolymers are Nucrel 1202 and Nucrel 0908 HS by DuPont.

In one embodiment, the ethylene (meth)acrylate copolymers are modified, preferably they are anhydride modified, more preferably they are maleic anhydride modified ethylene (meth)acrylate copolymers. Maleic anhydride modified ethylene/methacrylate copolymers are particularly preferred. In another embodiment, at least one of the ethylene (meth)acrylate or ethylene (meth)acrylic acid copolymers is an ethylene/(meth)acrylic acid copolymer, i.e. a copolymer of ethylene and acrylic acid or methacrylic acid.

In one embodiment, said copolymer is an ethylene acrylic acid copolymer (EAA).

In another embodiment, said copolymer is an ethylene methacrylic acid copolymer (EMAA).

In one embodiment, the ethylene/(meth)acrylic acid copolymer is neutralized.

The neutralized ethylene/(meth)acrylic acid copolymer is preferably a neutralized ethylene/methacrylic acid copolymer (EMAA).

Preferably, the neutralized ethylene/(meth)acrylic acid copolymer is sodium neutralized or zinc neutralized i.e. it is an ionomer.

In one embodiment, the outer sealant layer 1) consists essentially of, preferably consists of, from 30 to 75 wt% of an ethylene/alpha-olefin copolymer, preferably of a LDPE, and from 70 to 25 wt% of ethylene (meth)acrylate and/or ethylene (meth)acrylic acid copolymers, preferably of EMAA.

In one preferred embodiment, the outer sealant layer 1) consists essentially of, preferably consists of, from 45 to 55 wt% of an ethylene/alpha-olefin copolymer, preferably of a LDPE, and from 45 to 55 wt% of ethylene (meth)acrylate and/or ethylene (meth)acrylic acid copolymers, preferably of EMAA.

The outer sealant layer 1) may typically have a thickness from 0.5 to 10 µm. In some embodiments, the sealant layer may have a thickness from 1 to 5 µm, preferably from 1 to 3 µm.

The film of the present invention comprises an inner frangible layer 2) that consists of a frangible polymer blend.

The frangible blend comprises at least two chemically or physically incompatible polymers.

EZO frangible blends comprising chemically and/or physically incompatible polymers are preferably binary or ternary blends.

In one embodiment, the EZO frangible blend is a binary blend comprising, preferably consisting of:
(i) an ethylene and acrylic acid or methacrylic acid copolymer and (ii) a modified EVA copolymer, or
(i) an ethylene and acrylic acid or methacrylic acid copolymer and (iii) a polybutylene, or
(ii) an ethylene homo or copolymer or an EVA copolymer and (iii) a polybutylene.

Preferably, the EZO frangible binary blend consists of:
(i) more than 50% of an ethylene and acrylic acid or methacrylic acid copolymer and (ii) the complement to 100% of a modified EVA copolymer, or
(i) more than 50% of an ethylene and acrylic acid or methacrylic acid copolymer and (iii) the complement to 100% of a polybutylene, or
(ii) more than 50% of an ethylene homo or copolymer or an EVA copolymer and (iii) the complement to 100% of a polybutylene.

In a preferred embodiment, the EZO frangible binary blend comprises or preferably consists of
(i) a copolymer of ethylene and acrylic acid or methacrylic acid, and
(ii) a modified EVA copolymer.

Preferably, said EZO frangible binary blend comprises
(i) a neutralized copolymer of ethylene and acrylic acid or methacrylic acid i.e. an ionomer, having a melt flow index of less than 5 g/10 min, and
(ii) a modified ethylene/vinyl acetate copolymer having a melt flow index substantially higher than the melt flow index of the ionomer (I), whereby the melt flow indexes of the two polymers in the seal layer differ by at least 10 g/10 min.

Preferably, said binary blend comprises at least 60 wt% with respect to the blend weight of (i) an ionomer having a melt flow index of less than 5 g/10 min, and at most 40 wt% of (ii) a modified ethylene/vinyl acetate copolymer having a substantially higher melt flow index, whereby the melt flow indexes of the two polymers in the seal layer differ by at least 10 g/10 min.

Suitable EZO frangible binary blends of this kind are described for instance in EP192131A2 (Grace).

In another preferred embodiment, the EZO frangible binary blend comprises or preferably consists of
(ii) an ethylene homo- or copolymer and
(iii) a polybutylene.

Said EZO frangible binary blend comprises a major proportion (namely more than 50 wt%, preferably more than 60 wt% or more preferably more than 70 wt%) of (ii) an ethylene homo- or copolymer and a minor proportion (namely less than 50 wt%, preferably less than 40 wt%, more preferably less than 30 wt%) of (iii) a polybutylene, with respect to the blend weight.

Suitable EZO frangible binary blends of this kind are described for instance in EP1749655A1 (Bemis).

In another embodiment, the EZO frangible binary blend comprises or preferably consists of
(i) an ionomer and
(iii) a polybutylene.

Said EZO frangible binary blend comprise a major proportion (namely more than 50 wt%, preferably more than 60 wt% or more preferably more than 70 wt%) of (ii) an ionomer and a minor proportion (namely less than 50 wt%, preferably less than 40 wt%, more preferably less than 30 wt% by weight) of (iii) a polybutylene, with respect to the blend weight.

Suitable binary blends of this kind are described for instance in EP1749655A1 (Bemis).

In another embodiment, the EZO frangible binary blend comprises or preferably consists of
(ii) an EVA and
(iii) a polybutylene.

Said EZO frangible binary blend comprises a major proportion (namely more than 50 wt%, preferably more than 60 wt% or more preferably more than 70 wt%) of (ii) an ethylene vinyl acetate copolymer and a minor proportion (namely less than 50 wt%, preferably less than 40 wt%, more preferably less than 30 wt%) of (iii) a polybutylene, with respect to the blend weight.

Most preferably, said EZO frangible binary blend comprises 85 wt% of (ii) an EVA and 15 wt% of (iii) a polybutylene with respect to the blend weight. Suitable EZO frangible binary blends of this kind are described for instance in EP1749655A1 (Bemis).

In another embodiment, the EZO frangible binary blend comprises or preferably consists of
(i) a copolymer of ethylene and acrylic acid or methacrylic acid, and
(iii) a polybutylene.

Said EZO frangible binary blend comprises a major proportion (namely more than 50 wt%, preferably more than 60 wt% or more preferably more than 70 wt%) of (ii) an ethylene homo- or copolymer and a minor proportion (namely less than 50 wt%, preferably less than 40 wt%, more preferably less than 30 wt%) of (iii) a polybutylene, with respect to the blend weight

Suitable EZO frangible binary blends of this kind are described for instance in EP1749655A1 (Bemis).

Binary EZO frangible blends, made of an ethylene homo- or copolymer (ii) and a polybutylene (iii), are well known in the art of packaging and typically comprise from 60 to 90% of an ethylene homo- or copolymer and 40 to 10% of polybutylene.

The EZO frangible blend may further comprise a third component (ternary blends).

A preferred EZO frangible ternary blend comprises or preferably consists of
(i) a copolymer of ethylene and acrylic acid or methacrylic acid,
(ii) a modified EVA copolymer, and
(iii) a polybutylene.

Suitable EZO frangible ternary blends are described for instance in WO 99/54398.

Preferably, the EZO frangible ternary blend comprises or preferably consist of
(i) an ionomer,
(ii) a terpolymer of ethylene, vinyl acetate and carbon monoxide, and
(iii) an ethylene- butene copolymer or a butene homopolymer.

In a preferred embodiment, said polymer (i) is a zinc ionomer, which additionally provides for antiodour activity.

The Applicant found out that the incorporation of ionomers of divalent cations, especially of zinc, in inner layer(s) of multilayer films, provides for good antiodour properties. In case a barrier layer is present, the antiodour ionomer-containing layer is comprised between said barrier layer and the first outer sealant layer 1).

If the EZO frangible blend comprises an ionomer of a divalent cation, preferably of zinc, the film is advantageously endowed with both antiodour and EZO features.

The copolymer of ethylene and acrylic acid or methacrylic acid (i) refers to a copolymer of ethylene with a copolymerisable ethylenically unsaturated carboxylic acidic monomer selected from acrylic acid and methacrylic acid. The copolymer typically contains from 4 wt% to 18 wt% of acrylic or methacrylic acid units. Said copolymer can also contain, copolymerized therein, an alkyl acrylate or methacrylate, such as n-butyl acrylate or n-butyl methacrylate or isobutyl acrylate or isobutyl methacrylate. Said copolymer can be in the free acid form as well as in the ionized or partially ionized form, wherein the neutralizing cation can be any suitable metal ion, e.g. an alkali metal ion, a zinc ion, an alkali-earth metal ion or other multivalent metal ions; in this latter case, the copolymer is also termed "ionomer".

According to a preferred embodiment of the present invention, polymer (i) is an ionomer. Suitable polymers are those having a melt flow index of less than 5 g/10 min and more preferably less than 2 g/10 min, measured under the conditions E of ASTM D 1238. Particularly suitable polymers are ionomer resins with an acid content of up to 10%. Such polymers are commercially available as Surlyn™ (by DuPont).

Examples of suitable polymers (i) are Surlyn 1601 and Surlyn 1650 (DuPont).

A particularly suitable polymer is the zinc-neutralized ionomer Surlyn 1650 (DuPont).

The term "modified EVA" (ii) refers to ethylene-vinyl acetate based copolymer that may be modified by admixing with or grafting thereon a modifying component. Suitable modified EVA resins (ii) include ethylene-vinyl acetate copolymers grafted with carboxylic or, preferably, anhydride functionalities, such as for instance EVA grafted with maleic anhydride and the like.

Alternatively, polymers (ii) particularly suitable for the present frangible blends are terpolymers obtained by copolymerization of ethylene, vinyl acetate and carbon monoxide, as those described in e.g. US-A-3,780,140. Particularly preferred are those terpolymers comprising 3-30 % of units deriving from carbon monoxide, 40-80 % of units deriving from ethylene and 5-60 % of units deriving from vinyl acetate.

Alternatively, as polymer (ii) ethylene homo- or copolymers may be used.

In a preferred embodiment, the difference between the melt flow indexes of polymer (i) (a ionomer) and of polymer (ii) (a modified EVA copolymer or a terpolymer as defined above) in the EZO frangible blend used in the films of the present invention, is of at least 5 g/10 min or at least 10 g/10 min, more preferably of at least 15 g/10 min and even more preferably of at least 20 g/10 min.

MFI are measured under the conditions E of ASTM D 1238.

A suitable polymer (ii) is for instance the terpolymer ethylene/vinyl acetate/carbon monoxide ELVALOY 741 (DuPont).

The term "polybutene" or "polybutylene" (iii) includes homo and copolymers consisting essentially of a butene-1, butene-2, isobutene repeating units as well as ethylene-butene copolymers. Particularly suitable for the present invention are the ethylene-butene copolymers.

Examples of suitable polymers (iii) are Polybutene-1 PB 8640M and Polybutene-1 0300M (Lyondell Basell).

Preferably, the EZO frangible blend comprises a polymer (i) which has a MFI of less than 5 g/10 min and / or
a polymer (ii) which has a MFI higher than that of polymer (i) by at least 5 g/10 min.

The EZO frangible blend may be prepared by thoroughly mixing the components in powder form and then by melt extruding the blend.

In a preferred embodiment, the EZO frangible blend is a ternary blend, which comprises
from 35% to 83% of an ethylene and acrylic acid or methacrylic acid copolymer (i),
from 15% to 30% of a modified ethylene/vinyl acetate copolymer or of an ethylene/vinyl acetate/carbon monoxide terpolymer (ii) and
from 2% to 50% of a polybutylene (iii), with respect to the blend weight.

Even more preferably, the EZO frangible ternary blend comprises or most preferably consists of
from 50% to 70% of an ethylene and acrylic acid or methacrylic acid copolymer (i),
from 18% to 25% of a modified ethylene/vinyl acetate copolymer or of an ethylene/vinyl acetate/carbon monoxide terpolymer (ii) and
from 5% to 40% of a polybutylene (iii).

Most preferably, the EZO frangible ternary blend comprises or most preferably consists of
from 50% to 66% of an ethylene and acrylic acid or methacrylic acid copolymer (i), preferably of an ionomer;
from 18% to 25% of a modified ethylene/vinyl acetate copolymer or of an ethylene/vinyl acetate/carbon monoxide terpolymer (ii), preferably of an ethylene/vinyl acetate/ carbon monoxide terpolymer and
from 10% to 30% of a polybutylene (iii), preferably of an ethylene- butene copolymer or a butene homopolymer. Preferably, the frangible layer 2) has a thickness in the range of from 2 to 30 microns, more preferably from 3 to 20 microns, more preferably from 4 to 10 microns.

Typically, the bond strength between the layers of the present film is higher than the internal bond strength of the frangible layer components thus allowing, upon opening of the package, the rupture of the frangible layer without undesired layer separations or delamination.

For instance, the bond strength between the outer layer and the remaining part of the film is at least 600 g/2.54 cm, namely higher than the internal bond strength of the frangible layer.

The film according to the present invention comprises a second outer layer 3) comprising at least 80 wt% of at least a stiff polymer, preferably of at least a polymer selected from the group consisting of polyesters, styrene-based polymers, cyclo-olefin copolymers, poly-lactic acids and mixtures thereof.

Preferably, the outer layer 3) comprises at least 85%, more preferably at least 90 wt%, still more preferably at least 95 wt% or at least 98 wt% of one or more of stiff polymers, preferably of stiff polymers mentioned above.

The polymers mentioned above are herein also named as "stiff polymers"

With the term "stiff polymer" a thermoplastic polymer suitable for packaging applications characterized by a flexural modulus at 23°C of at least 1.5 GPa measured according to ASTM D790 is meant.

Preferably, the present stiff polymer is characterized by a flexural modulus at 23°C of at least 2.0 GPa or at least 2.5 GPa measured according to ASTM D790.

Preferably, the present stiff polymer is characterized by a flexural modulus at 23°C from 1.5 GPa to 3.5 GPa, more preferably from 2.0 GPa to 3.0 GPa measured according to ASTM D790.

In one embodiment, the outer layer 3) comprises at least 60 wt%, preferably at least 70 wt%, more preferably at least 80%, even more preferably at least 90 wt%, still more preferably at least 95 wt% or at least 98 wt% of one or more polyesters.

In one embodiment, outer layer 3) consists essentially of one or more polyesters.

In one embodiment, outer layer 3) consists of one or more polyesters.

In one embodiment, the one or more polyesters are polyesters of aromatic dicarboxylic acids, more preferably of terephthalic acid.

In one embodiment, said polyesters are copolyesters, more preferably poly(ethylene terephthalate) copolymers.

Preferably, the outer layer 3) comprises at least 70 wt%, preferably at least 80 wt%, more preferably at least 90 wt% or at least 95 wt% of (semi)crystalline polyesters and no more than 30 wt%, preferably no more than 20 wt%, more preferably no more than 10 wt% or no more than 5 wt% of amorphous polyesters.

In one embodiment, the outer layer 3) consists of (semi)crystalline polyesters.

A suitable (semi)crystalline polyester for use in the outer layer 3) of the film of the invention is for example the product commercialized under the tradename RamapetN180 by Indorama
A suitable amorphous copolyester for use in the outer layer 3) of the film of the invention is for example the product commercialized under the tradename GN001 by Eastman Chemical.

In one embodiment, the outer layer 3) comprises at least 60 wt%, preferably at least 70 wt%, more preferably at least 80%, even more preferably at least 90 wt%, still more preferably at least 95 wt% or at least 98 wt% of one or more styrene-based polymers.

In one embodiment, the outer layer 3) consists essentially of one or more one or more styrene-based polymers.

In one embodiment, the outer layer 3) consists of one or more one or more styrene-based polymers. In one embodiment, outer layer 3) comprises at least 60 wt%, preferably at least 70 wt%, more preferably at least 80%, even more preferably at least 90 wt%, still more preferably at least 95 wt% or at least 98 wt% of a mixture of one or more polyesters and one or more styrene-based polymers.

In one embodiment, the outer layer 3) consists essentially of a mixture of one or more polyesters and one or more styrene-based polymers.

In one embodiment, the outer layer 3) consists of a mixture of one or more polyesters and one or more styrene-based polymers.

In one embodiment, the one or more styrene-based polymers are preferably selected from polystyrenes and styrene-butadiene copolymers.

Thus, in one embodiment, the outer layer 3) comprises at least 60 wt%, preferably at least 70 wt%, more preferably at least 80%, even more preferably at least 90 wt%, still more preferably at least 95 wt% or at least 98 wt% of one or more polystyrenes.

In another embodiment, the outer layer 3) comprises at least 60 wt%, preferably at least 70 wt%, more preferably at least 80%, even more preferably at least 90 wt%, still more preferably at least 95 wt% or at least 98 wt% of one or more styrene-butadiene copolymers.

In another embodiment, the outer layer 3) comprises at least 60 wt%, preferably at least 70 wt%, more preferably at least 80%, even more preferably at least 90 wt%, still more preferably at least 95 wt% or at least 98 wt% of a mixture of at least one polystyrene and at least one styrene-butadiene copolymer.

For example, this mixture can comprise from 20 wt% to 80 wt%, preferably from 30 wt% to 70 wt%, more preferably from 40 wt% to 60 wt% of least one polystyrene, and from 80 wt% to 20 wt%, preferably from 70 wt% to 30 wt%, more preferably from 60 wt% to 40 wt% of at least one styrene-butadiene copolymer.

Examples of polystyrene resins are Styrolux 684D by BASF and Polystyrol 143E by BASF or "K resin KR53" by Chevron Phillips Chemicals which can be used either alone or in blend.

In one embodiment, the outer layer 3) comprises at least 60 wt%, preferably at least 70 wt%, more preferably at least 80%, even more preferably at least 90 wt%, still more preferably at least 95 wt% or at least 98 wt% of one or more cyclo-olefin copolymers.

Examples of suitable cyclo-olefin resins are TOPAS 8007 by Topas Advanced Polymer Inc. or APEL by Mitsui, which may be used alone or in blend.

In one embodiment, the outer layer 3) comprises at least 60 wt%, preferably at least 70 wt%, more preferably at least 80%, even more preferably at least 90 wt%, still more preferably at least 95 wt% or at least 98 wt% of one or more poly-lactic acids.

An example of suitable poly-lactic acids is Ingeo 4032B by NatureWorks LLC.

The thickness of the second outer layer 3) of the present film is at least 45%, preferably at least 65%, more preferably at least 80% of the total thickness of the film.

In one embodiment, the thickness of the second outer layer 3) is from 45% to 98%, preferably from 65% to 95%, even more preferably from 80% to 90% in respect of the total thickness of the film.

The Applicant realized that the second outer layer 3) of the film of the invention, due to the nature of the resins and to a significant thickness, is characterized by a certain stiffness, which contributes to a reduced adhesiveness to the sealant layer and to a smooth unwinding of the film from the roll.

The second outer layer 3) of the present film may consist of a single layer or of two or more directly adhered layers, each of them comprising at least 80 wt% of, preferably consisting of, one or more of the polymers as previously defined.

In case the second outer layer 3) is made of a plurality of directly adhered layers, the thickness of the second outer layer 3) corresponds to the sum of the thicknesses of all the layers of said plurality of directly adhered layers.

In one embodiment, the second outer layer 3) may have a thickness of at least 50 or 70 microns, preferably of at least 90 microns, more preferably of at least 130 microns, even more preferably of at least 200 microns.

In one embodiment, the second outer layer 3) may have a thickness in the range of from 50 to 350 microns, from 70 to 350 microns or from 90 to 350 microns, preferably from 130 to 270 microns, more preferably from 200 to 230 microns.

The film of the invention may comprise, further to layers 1), 2) and 3) listed above, one or more additional inner layers to provide the film with specific physical and/or mechanical properties.

In one embodiment, the film can comprise one or more inner gas barrier layers. The barrier layers typically comprise or consists of a polymeric material with low oxygen transmission characteristics, typically a polymer selected from PVDC, polyamides, EVOH, polyesters, and blends thereof. In a preferred embodiment, the barrier layer comprises or consists of EVOH, optionally blended with polyamides.

Examples of suitable resins for the gas barrier layer are SOARNOL ET3803 or SOARNOL AT4403 (Nippon Gohsei), Eval L171B (EVALCA/Kuraray), Soarnol GH3804B (Nippon Gohsei), EVAL F101B (EVALCA/Kuraray).

In one embodiment, the thickness of each inner gas barrier layer may be comprised between 4 and 20 microns, preferably between 6 and 18 microns, more preferably between 8 and 14 microns.

In one embodiment, the film can comprise one or more inner bulk layers. Such bulk layers preferably comprise, more preferably consists of, polymers used to improve the stiffness, the abuse or puncture resistance of the film or just to provide the final film with the desired thickness.

Polymers suitable for these layers are for instance selected from polyesters, styrene-based polymers, ethylene-vinyl acetate copolymers, ethylene-(meth)acrylates copolymers, ionomers, preferably ionomers and ethylene-vinyl acetate copolymers, more preferably ethylene-vinyl acetate copolymers.

In one embodiment, when the stiffness imparted by the outer layer 3) needs to be increased, the film of the present invention may include one or more inner bulk layers comprising, preferably consisting of, at least one stiff polymer, preferably selected from the group consisting of polyesters, styrene-based polymers, cyclo-olefin copolymers, poly-lactic acids and mixtures thereof.

Examples of suitable resins for the inner bulk layer(s) are ESCORENE ULTRA FL00909 (Exxon Mobil), GN001 (Eastman Chemicals), Surlyn 1601 (DuPont), STYRON 678E (Trinseo), STYROLUX 684 D and Styrolutions PS 486N (Ineos Styrosolutions).

Examples of suitable stiff polymers for the inner bulk layer(s) are GN001 (Eastman Chemicals), STYRON 678E (Trinseo), STYROLUX 684 D and Styrolutions PS 486N (Ineos Styrosolutions).

The thickness of the inner bulk layers may vary within broad ranges, according to the properties imparted by said bulk layer. For example, it may be comprised between 15 and 250 microns, preferably between 20 and 200 microns, more preferably between 30 and 180 microns.

In one embodiment, the various bulk layers present within the film have the same composition. In one embodiment, the various bulk layers present within the film have different composition.

In one embodiment, the film can comprise one or more inner tie layers. Such tie layers are employed to better adhere one layer to another in the overall structure.

For example, the film may include tie layer(s) directly adhered to one or both sides of the inner gas barrier layer. For example, the film may include tie layer(s) directly adhered to one or both sides of the bulk layer(s).

Tie layers may include polymers having grafted polar groups so that the polymer is capable of covalently bonding to polar polymers such as EVOH or polyamides. Useful polymers for tie layers include ethylene-unsaturated acid copolymers, ethylene-unsaturated ester copolymers, anhydride-modified polyolefins, polyurethane, and mixtures thereof. Preferred polymers for tie layers include one or more of thermoplastic polymers such as ethylene-vinyl acetate copolymers with high vinyl acetate content (e.g. 18 - 28 wt. % or even more), ethylene-(meth)acrylic acid copolymers, ethylene homo-polymers or co-polymers, modified with anhydride or carboxylic acid functionalities, blends of these resins or blends of any of the above resins with an ethylene homo- or co-polymer.

Examples of suitable tie resins are ESCORENE ULTRA FL 00728CC (Exxon Mobil) and PLEXAR pX1164 (Lyondell Basell Industries).

Tie layers are of a sufficient thickness to provide the adherence function, as it is known in the art. In the present invention, the tie layer(s) may have each a thickness generally comprised between 4 and 18 microns, preferably comprised between 6 and 12 microns. Each tie layer may be of a substantially similar or of a different composition and/or thickness.

The film of the invention may have at least 3 layers, at least 4 layers, at least 5 layers, at least 6 layers, at least 7 layers, at least 8 layers, at least 9 layers.

Preferably, the film of the invention may have from 3 to 14 layers, more preferably from 5 to 10 layers.

In one embodiment, the film has 5 layers; In one embodiment, the film has 7 layers; in another embodiment, the film has 9 layers.

The layers of the film of the invention may include one or more additives typically present in food packaging films, as it is known to those skilled in the art. Such additives may be for example slip agents, antiblock agents, antioxidants, pigments and dyes, as known in the art.

Generally, in order to improve the processing of the film in a high speed packaging equipment, slip and/or anti-blocking additives may be added to one or both of the outer layers 1) and 3), preferably in outer layer 3). These additives may be added in the form of a concentrate in a polyester carrier resin. The amount of carrier is typically in the order of 0.1 - 5% of the total weight of the layer. Nonetheless, as will be shown in the experimental section, in the films of the present invention the presence of slip and/or anti-blocking additives can be avoided (in particular in the outer layer 3)), without prejudice the non-stickiness of the film when wound in rolls.

The total thickness of the film according to the present invention may vary within a broad range: films for use as bottom webs in vacuum skin packaging may be up to 2 mm thick. In one embodiment, the total thickness of the film may be comprised between 100 and 1000 microns, preferably between 150 and 600 microns, more preferably between 180 and 400 microns, even more preferably between 200 and 300 microns. In some embodiments, the film may have a thickness of 200 microns, or 250 microns, or 260 microns, or 280 microns, or 300 microns.

In one embodiment, the total thickness of the film of the invention is at least 100 microns, preferably at least 150 microns, more preferably at least 180 microns, even more preferably at least 200 microns.

The total thickness of the layer(s) of the film comprising at least a stiff polymer, preferably a stiff polymer selected from the group consisting of polyesters, styrene-based polymers, cyclo-olefin copolymers, poly-lactic acids and their admixtures - i.e. the layer(s) of the second outer layer 3) and possibly one or more inner layers - is, preferably, at least 70%, more preferably at least 80% of the total thickness of the film.

The significant amount of these polymers in the present film provides for a certain stiffness, which is useful for a smooth unwinding from the roll without breaking the inner EZO frangible layer.

In one embodiment, the total thickness of the layer(s) of the film comprising at least a polyester - i.e. the layer(s) of the second outer layer 3) and possibly one or more inner layers - is, preferably, at least 70%, more preferably at least 80%, most preferably at least 90% of the total thickness of the film.

The film of the present invention is further characterized in that, onto the outer surface(s), anti-sticking powder(s) may be present but in amount lower than 0.08 g/m², preferably lower than 0.06 g/m2, more preferably lower than 0.04 g/m², even more preferably anti-sticking powder(s) are not present.

Preferably, both the outer surfaces of the film are free of anti-sticking powders.

In one embodiment, the films according to the present invention are non-oriented, i.e. have not undergone any orientation process during their manufacture. The films of the present invention, when used as VSP bottom web, are generally non-oriented. In another embodiment, the films can be oriented, preferably biaxially oriented.

The films according to the present invention are preferably not heat-shrinkable, namely they have an unrestrained linear thermal shrinkage (free shrink percentage) at 160°C (in oil) in both the machine and transverse directions of less than 15%, preferably less than 10% or than 5% as measured according to ASTM D-2732 Test Method.

The films of the present invention may be cross-linked, in order to improve the mechanical and/or thermal resistance of the film. Cross-linking may be achieved by using chemical additives or by subjecting the film layers to an energetic radiation treatment, such as a high-energy electron beam treatment, to induce cross-linking between molecules of the irradiated material.

Preferably, the films of the invention are not cross-linked.

As will be demonstrated in the experimental section, the films according to the present invention do not show sticking and do not break when the film is unwound, after being wound in rolls and stored. Additionally, the films have good properties in terms of machinability and formability and run properly on the vacuum skin-packaging machine.

Vacuum skin packages manufactured using the film of the invention as bottom web open smoothly with the easy opening mechanism and the top web is easily peeled from the bottom web without defects.

The films of the present invention can be manufactured by any suitable process known in the art for manufacturing films, such as co-extrusion, lamination, extrusion lamination, extrusion coating and sheet-calandering. Preferably, the films can be manufactured by a co-extrusion process, more preferably through a flat die. In coextrusion, at least the compositions of the sealant layer 1), the frangible blend of layer 2) and the composition of the outer layer(s) 3) are extruded simultaneously through an extrusion die.

In one embodiment, the films of the invention are fully coextruded, i.e. all the layers of the film are coextruded simultaneously through an extrusion die.

In one embodiment, coextrusion is flat coextrusion.

The films of the present inventions are advantageous in that they can be fully coextruded and wound to form a roll without any sticking issue upon unwinding the rolls and in the absence of any oxydry additive to be spread onto the film. The full coextrusion process allows preparing in a single step the film, to roll it up and to stock it until it is used on the packaging machine.

A further object of the present invention is a roll made of the multilayer film according to the invention.

Advantageously, the roll of the present invention is prepared by winding the present film after application of very low amounts of, preferably without needing any application of, anti-sticking powder. The roll of the present invention is characterized in that anti-sticking powder(s) may be present between the outer sealant layer of the film in a first spire and the outer layer of the film in the next spire in amount lower than 0.08 g/m², preferably lower than 0.06 g/m², even more preferably lower than 0.04 g/m², most preferably anti-sticking powder(s) are not present.

Preferably, the roll of the present invention is free of anti-sticking powders.

Advantageously, the present rolls are stable as they are not affected by "telescoping".

A further object of the present invention is a thermoformed support comprising, preferably consisting of the multilayer film according to the invention. The sealant layer of the film is the internal surface of the support, i.e. the surface of the support which in the package will contact the product, preferably the food product, and to which a top web will be sealed.

Such thermoformed support may be flat or shaped to form a container, for example a tray.

In thermoforming, in general, a film in the form of a flat sheet is heated until the thermoplastic material is sufficiently softened and then placed over a mould, typically made of aluminum. The heated film is then forced towards the surface of the mould by vacuum, air pressure and/or direct mechanical force, so that it assumes the shape of the mould. The film is then cooled while being held against the mould and thus originates a thermoformed shaped product, which is ejected from the mould.

A further object of the present invention is a vacuum skin package comprising a bottom web, a top web sealed to the sealant layer of the bottom web and a product, preferably a food product, enclosed between said top and bottom webs, characterized in that the bottom web comprises, preferably consists of, the multilayer film according to the invention.

In a preferred embodiment, the bottom web may be a thermoformed support according to the invention.

The package according to the invention will have easy-to-open properties thanks to the presence of the frangible layer 2) in the bottom web. This ensures an easy opening of the package, without defects upon opening, such as fringes or angel hairs.

Suitable films for use as top skin films in the VSP package of the present invention are for example those sold by Cryovac under the tradenames TS201, TH300, VST0250, VST0280, which comprise a sealant layer consisting of LDPE, or VST0291, TH301, which comprise a sealant layer consisting of a neutralized ethylene/methacrylic acid copolymer.

In fact, the sealant layer of the film according to the invention can advantageously be sealed to top webs whose sealant layer is made of neutralized ethylene/(meth)acrylic acid copolymers, LDPE, ethylene/alpha-olefin copolymers, ethylene/vinyl acetate copolymers and blends thereof. Accordingly, in the present VSP package, the top webs preferably comprise an outer sealant layer comprising a polymer selected from the group consisting of neutralized ethylene/(meth)acrylic acid copolymers, LDPE, ethylene/alpha-olefin copolymers and ethylene/vinyl acetate copolymers

The VSP packages can be made by a conventional VSP process and using conventional VSP equipment, such as a Multivac® CD 6000 machine, wherein a bottom web is thermoformed in-line with the vacuum skin packaging process, or a Multivac R570CD.

A further object of the present invention is the use of the film according to the present invention as a bottom web for manufacturing a vacuum skin package.

Advantageously, due to the absence of anti-sticking powders, the use of the present film in the manufacture of VSP packages is not affected by the drawbacks mentioned before (e.g. machinability issues, reel instability, contamination of the working environment). The vacuum skin packages according to the invention, wherein the film of the invention is employed as the bottom web, can be advantageously used also for cooking or heating in both microwave oven and conventional oven.

The packages maintain the easy opening properties also after the food product contained therein has undergone cooking or heating in both microwave oven and conventional oven.

### EXPERIMENTAL PART

### EXAMPLES

The present invention can be further understood by reference to the following examples that are merely illustrative and are not to be interpreted as a limitation to the scope of the present invention that is defined by the appended claims.

In the following examples, the polymers indicated in Table 1 below have been employed:

**Table 1**

| Tradename | Supplier | Acronym |
|---|---|---|
| LD259 | ExxonMobil | LDPE1 |
| CONSTAB AB 06051 LD | IMCD Italia Spa | LLDPE1 |
| POLYBATCH FSU 105E | Schulman | LDPE2 |
| LD158BW | ExxonMobil | LDPE3 |
| Surlyn 1705-1 | DuPont | EMAA-Zn |
| Surlyn 1601 | DuPont | EMAA-Na |
| Bynel 21E830 | DuPont | EMA-md |
| NUCREL 1202 | DuPont | EMAA1 |
| Toppyl PB 8640M | LyondeIIBaseII Industries | PB1 |
| Polybutene-1 0300M | LyondeIIBaseII Industries | PB2 |
| ELVALOY 741 | DuPont | EVA1 |
| ESCORENE ULTRA FL00909 | ExxonMobil | EVA2 |
| ESCORENE ULTRA FL 00728CC | ExxonMobil | EVA3 |
| Elvaloy EP1163 | DuPont | EVA4 |
| PLEXAR pX1164 | LyondeIIBaseII Industries / Nippon Gohsei | EVA-md (adhesive) |
| SOARNOL ET3803 | Nippon Gohsei | EVOH |
| GN001 | Eastman Chemical | PETG1 |
| Sukano G dc S722 | Sukano | PETG2 |
| PETALO MC 300/1 | Dentis | PET1 |
| RAMAPET N180 | Indorama | PET2 |
| Sukano T dc S479 | Sukano | PET3 |
| Petalo RPET 400 | Dentis | PET4 |
| Styrolutions PS 486N | INEOS STYROLUTION | PS1 |
| STYRON 678E | Trinseo | PS2 |
| STYROLUX 684 D | INEOS STYROLUTION | SBS |
| Sukano T cC S561c | Sukano | MB1 |
| FMXPSGI32376 | COLOR SYSTEM | MB2 |

| | | |
|---|---|---|
| LDPE1: Low Density Polyethylene (homopolymer). Density 0.915 g/cm³; Melt Flow Index (190°C/2.16 kg) 12 g/10 min; Melting point 105°C; LLDPE1: Masterbatch AntiBlock, Silica in Linear Low Density Polyethylene. Density 1.030 g/cm³; Melt Flow Index (190°C/2.16 kg) 3.3 g/10 min LDPE2: Masterbatch AntiBlock, Silica in Low Density Polyethylene (10%). Density 0.98 g/cc; Melt Flow Index (190°C/2.16 kg) 20 g/10 min. LDPE3: Low Density Polyethylene (homopolymer); Density 0.925 g/cc; Melt Flow Index (190°C/2.16 kg) 2 g/10 min; Melting Point: 111°C. EMAA-Zn: Zinc Neutralized Ethylene Methacrylic Acid Copolymer (ionomer). Comonomer content 15%; Density 0.95 g/cc; Melt Flow Index (190°C / 02.16 kg).5.50 g/10 min; Melting point 95°C; Vicat softening point 65°C. EMAA-Na: Sodium Neutralized Ethylene Methacrylic Acid Copolymer (ionomer). Density 0.940 g/cc; Melt Flow Index (190°C / 02.16 kg).1.30 g/10 min; Melting point 96°C. EMA-md: Maleic Anhydride-Modified Ethylene/Methyl Acrylate Copolymer. Density 0.946 g/cc; Melt Flow Index (190°C / 02.16 kg) 7.50 g/10 min; Melting point 93°C. EMAA1: Ethylene/Methacrylic Acid Copolymer Density 0.94 g/cm³; Melt Flow Index (190°C/2.16 kg) 1.5 g/10 min; Melting point 99°C; Vicat softening point 75°C. PB1: Polybutene. Density 0.906 g/cc, Melt Flow Index (200°C / 02.16 kg) 10.0 g/10, Melt Flow Index (190°C / 02.16 kg).1 g/10 min, Melting point 97°C. PB2: Polybutene. Density 0.915 g/cc, Melt Flow Index (190°C / 02.16 kg) 4.0 g/10, Melting point 116°C. EVA1: Ethylene/vinyl acetate/carbon monoxide (EVA/CO) terpolymer. Comonomer content 24%; Density 1 g/cc; Melting point 66°C. EVA2: Ethylene/Vinyl Acetate Copolymer. Comonomer content 9.4%; Density 0.928 g/cc; Melt Flow Index (190°C / 02.16 kg) 9 g/10 min. EVA3: Ethylene/Vinyl Acetate Copolymer. Comonomer content 27.5%; Density 0.9515 g/cc; Melt Flow Index (190°C / 02.16 kg) 7 g/10 min; Melting point 73°C; Vicat softening point 45°C. EVA4: Ethylene/Vinyl Acetate Copolymer. Comonomer content 24%; Density 1 g/cc; Melt Flow Index (190°C / 02.16 kg) 35 g/10 min; Melting point 66°C. EVA-md: Maleic Anhydride-Modified Ethylene/Vinyl Acetate Copolymer. Comonomer content (Vinylacetate) 15%; Density 0.9257; Melt Flow Index (190°C / 02.16 kg).3.81 g/10 min; Vicat Softening Point 58°C. EVOH: Comonomer (ethylene) content: 37-39%; Crystallization point: 152°C; Density 1.17 g/cc; Glass transition temperature: 58°C; Melt Flow Index (210°C / 02.16 kg).3 - 3.6 g/10 min; Melting Point: 173C. PETG1: Polyethylene Terephthalate/Glycol. Density 1.27 g/cc, Glass Transition 78°C, Intrinsic Viscosity 0.75 dl/g, flexural modulus (23°C, ASTM 790) 2.1 GPa. PETG2: Silica in Polyethylene Terephthalate/Glycol.; Density 1.4 g/cc; Glass transition temperature: 74°C. PET1: Polyethylene Terephthalate. Density 1.33 g/cc; Intrinsic Viscosity 0.72 dl/g. PET2: Polyester, copolymer of terephthalic acid, isophthalic acid and mono-ethylene glycol -, Density 1.4 g/cc, Glass Transition 78°C, Melting point 245°C, Viscosity Solution 0.80 mPa.sec. PET3: Silica in Polyethylene Terephthalate 10%. Bulk (Apparent) Density 0.8 g/cc. PET4: Polyethylene Terephthalate. Density 1.33 g/cc; Intrinsic Viscosity 0.72 dl/g. PS1: Impact-Modified Polystyrene, Density 1.04 g/cc; Melt Flow Index (200°C / 05.00 kg) 3.9 g/10 min; Vicat softening point 96°C. PS2: Polystyrene. Density 1.05 g/cc; Melt Flow Index (200°C / 05.00 kg) 10.5 g/10 min, flexural modulus (23°C, ISO 178) 3.5 GPa. SBS: Styrene/Butadiene Copolymer (Styrene/Butadiene/Styrene Triblock). Density 1.01 g/cc; Glass Transition temperature: 98°C; Melt Flow Index (200°C / 05.00 kg) 11 g/10 min; Vicat softening point: 83°C, flexural modulus (23°C, ISO 178) 1.7 GPa. MB1: Pigment (carbon black) in Polyethylene Terephthalate 30%, Density 1.2 g/cc; Melting point 250°C. MB2: Bright Yellow in Polystyrene. | | |

The composition of films according to the invention (Ex. 1 - 9) and of comparative films (C1 - C3) is reported in Table 2 below:

**Table 2**

| Film | Layer | Layer composition | Layer thickness (microns) | Film thickness (microns) |
|---|---|---|---|---|
| Ex 1 | 1 (sealant) | 49% LDPE1 | 1.0 | 250.0 |
| | | 49% EMAA1 | | |
| | | 2% LLDPE1 (antiblock) | | |
| | 2 (frangible) | 30% PB1 | 4.0 | |
| | | 19% EVA1 | | |
| | | 51% EMAA-Zn | | |
| | | 100% EVA2 | 25.0 | |
| | | 100% EVA3 | 10.0 | |
| | 3 (outer) | 99.5% PETG1 | 12.0 | |
| | | 0.5% PETG2 | | |
| | 3 (outer) | 96.8% PET1 | 186.0 | |
| | | 3.20% MB1 | | |
| | 3 (outer) | 99% PET2 | 12.0 | |
| | | 1% PET3 | | |
| | % thickness polyester layers vs film total thickness | | | 84% |
| | | | | |
| Ex 2 | 1 (sealant) | 49% LDPE1 | 1.5 | 300.0 |
| | | 49% EMAA1 | | |
| | | 2% LLDPE1 (antiblock) | | |
| | 2 (frangible) | 30% PB1 | 4.5 | |
| | | 19% EVA1 | | |
| | | 51% EMAA-Zn | | |
| | | 100% EVA2 | 19.0 | |
| | | 100% EVA3 | 10.0 | |
| | 3 (outer) | 100% PETG1 | 19.0 | |
| | 3 (outer) | 97.0% PET1 | 227.0 | |
| | | 3.00% MB1 | | |
| | 3 (outer) | 100% PET2 | 19.0 | |
| | % thickness polyester layers vs film total thickness | | | 88% |
| | | | | |
| Ex 3 | 1 (sealant) | 49% LDPE1 | 1.0 | 260.0 |
| | | 49% EMAA1 | | |
| | | 2% LLDPE1 (antiblock) | | |
| | 2 (frangible) | 30% PB1 | 4.0 | |
| | | 19% EVA1 | | |
| | | 51% EMAA-Zn | | |
| | | 100% EVA2 | 35.0 | |
| | | 100% EVA3 | 10.0 | |
| | 3 (outer) | 99.5% PETG1 | 12.0 | |
| | | 0.5% PETG2 | | |
| | 3 (outer) | 100% PET4 | 186.0 | |
| | 3 (outer) | 97% PET2 | 12.0 | |
| | | 3% PET3 | | |
| | % thickness polyester layers vs film total thickness | | | 81% |
| | | | | |
| Ex 4 | 1 (sealant) | 48% LDPE1 | 1.0 | 260.0 |
| | | 48% EMAA1 | | |
| | | 4% LLDPE1 (antiblock) | | |
| | 2 (frangible) | 30% PB1 | 4.0 | |
| | | 19% EVA1 | | |
| | | 51% EMAA-Zn | | |
| | | 100% EVA2 | 35.0 | |
| | | 100% EVA3 | 10.0 | |
| | 3 (outer) | 99.5% PETG1 | 12.0 | |
| | | 0.5% PETG2 | | |
| | 3 (outer) | 100% PET4 | 186.0 | |
| | 3 (outer) | 99% PET2 | 12.0 | |
| | | 1% PET3 | | |
| | % thickness polyester layers vs film total thickness | | | 81% |
| | | | | |
| Ex 5 | 1 (sealant) | 69% LDPE1 | 1.0 | 260.0 |
| | | 29% EMAA1 | | |
| | | 2% LDPE2 (antiblock) | | |
| | 2 (frangible) | 30% PB1 | 4.0 | |
| | | 19% EVA1 | | |
| | | 51% EMAA-Zn | | |
| | | 100% EVA2 | 25.0 | |
| | | 100% EVA3 | 10.0 | |
| | 3 (outer) | 99.5% PETG1 | 12.0 | |
| | | 0.5% PETG2 | | |
| | 3 (outer) | 100% PET4 | 186.0 | |
| | 3 (outer) | 99% PET2 | 12.0 | |
| | | 1% PET3 | | |
| | % thickness polyester layers vs film total thickness | | | 81% |
| | | | | |
| Ex 6 | 1 (sealant) | 29% LDPE1 | 1.0 | 260.0 |
| | | 69% EMAA1 | | |
| | | 2% LDPE2 (antiblock) | | |
| | 2 (frangible) | 30% PB1 | 4.0 | |
| | | 19% EVA1 | | |
| | | 51% EMAA-Zn | | |
| | | 100% EVA2 | 35.0 | |
| | | 100% EVA3 | 10.0 | |
| | 3 (outer) | 99.5% PETG1 | 12.0 | |
| | | 0.5% PETG2 | | |
| | 3 (outer) | 100% PET4 | 186.0 | |
| | 3 (outer) | 99% PET2 | 12.0 | |
| | | 1% PET3 | | |
| | % thickness polyester layers vs film total thickness | | | 81% |
| | | | | |
| Ex 7 | 1 (sealant) | 49% LDPE1 | 1.0 | 250.0 |
| | | 49% LDPE3 | | |
| | | 2% LDPE2 (antiblock) | | |
| | 2 (frangible) | 30% PB1 | 4.0 | |
| | | 19% EVA1 | | |
| | | 51% EMAA-Zn | | |
| | | 100% EVA2 | 25.0 | |
| | | 100% EVA3 | 10.0 | |
| | 3 (outer) | 99.5% PETG1 | 12.0 | |
| | | 0.5% PETG2 | | |
| | 3 (outer) | 100% PET4 | 186.0 | |
| | 3 (outer) | 99% PET2 | 12.0 | |
| | | 1% PET3 | | |
| | % thickness polyester layers vs film total thickness | | | 84% |
| | | | | |
| Ex. 8 | 1 (sealant) | 50% LDPE1 | 2.0 | 200.0 |
| | | 49% EMAA1 | | |
| | | 1% LLDPE1 (antiblock) | | |
| | 2 (frangible) | 20% PB1 | 6.0 | |
| | | 22% EVA1 | | |
| | | 58% EMAA-Na | | |
| | | 100% EVA-md | 8.0 | |
| | | 92% PS1 | 61.5 | |
| | | 8% MB2 | | |
| | | 100% EVA-md | 8.0 | |
| | | 100% EVOH | 10.0 | |
| | | 100% EVA-md | 8.0 | |
| | 3 (outer) | 92% PS1 | 61.5 | |
| | | 8% MB2 | | |
| | 3 (outer) | 100% PS1 | 35.0 | |
| | % thickness polystyrene layers vs film total thickness | | | 79% |
| | | | | |
| Ex 9 | 1 (sealant) | 48% LDPE1 | 1.0 | 250.0 |
| | | 48% EMAA1 | | |
| | | 4% LLDPE1 (antiblock) | | |
| | 2 (frangible) | 30% PB1 | 4.0 | |
| | | 19% EVA1 | | |
| | | 51% EMAA-Zn | | |
| | | 100% EVA2 | 25.0 | |
| | | 100% EVA3 | 10.0 | |
| | 3 (outer) | 99.5% PETG1 | 12.0 | |
| | | 0.5% PETG2 | | |
| | 3 (outer) | 100% PET4 | 186.0 | |
| | 3 (outer) | 99% PET2 | 12.0 | |
| | | 1% PET3 | | |
| | % thickness polyester layers vs film total thickness | | | 84% |
| | | | | |
| C1 (with oxydry) | 1 (sealant) | 100% EVA2 | 2.0 | 260.0 |
| | 2 (frangible) | 30% PB2 | 6.0 | |
| | | 19% EVA4 | | |
| | | 51% EMAA-Na | | |
| | | 100% EMA-md | 26.0 | |
| | 3 (outer) | 100% PETG1 | 14.0 | |
| | 3 (outer) | 100% PET4 | 202.0 | |
| | 3 (outer) | 100% PETG1 | 10.0 | |
| | % thickness polyester layers vs film total thickness | | | 87% |
| | | | | |
| C2 (with oxydry) | 1 (sealant) | 100% EVA2 | 2.0 | 280.0 |
| | 2 (frangible) | 10% PB1 | 6.0 | |
| | | 24% EVA4 | | |
| | | 66% EMAA-Na | | |
| | | 100% EVA-md | 8.0 | |
| | | 45% PS2 | 103.5 | |
| | | 55% SBS | | |
| | | 100% EVA-md | 8.0 | |
| | | 100% EVOH | 6.0 | |
| | | 100% EVA-md | 8.0 | |
| | 3 (outer) | 45% PS2 | 103.5 | |
| | | 55% SBS | | |
| | 3 (outer) | 45% PS2 | 35 | |
| | | 55% SBS | | |
| | % thickness styrene-based polymer layers vs film total thickness | | | 86% |
| | | | | |
| C3 (no oxydry) | 1 (sealant) | 100% EVA2 | 2.0 | 380.0 |
| | 2 (frangible) | 30% PB2 | 6.0 | |
| | | 19% EVA4 | | |
| | | 51% EMAA-Na | | |
| | | 100% EMA-md | 30.0 | |
| | 3 (outer) | 100% PETG1 | 14.0 | |
| | 3 (outer) | 100% PET4 | 318.0 | |
| | 3 (outer) | 100% PETG1 | 10.0 | |
| | % thickness polyester layers vs film total thickness | | | 90% |

All the films of Table 2 were manufactured by coextrusion through flat die.

The films of example 8 and C2 were obtained through a fully coextrusion process (all the layers coextruded at the same time).

The other films were manufactured through extrusion lamination where a rigid part of the web has been first coextruded (the outer layers of C1, C3, of Ex. 1 to 7 and Ex. 9) and the second part of the structures (all the remaining layers) has been extrusion coated onto the first part.

Cornstarch (C300R) was added to the sealant layer of films C1 and C2, just before film winding. An equipment from Baldwin was used for the operation. The films was electrostatically charged before spraying the powder onto the sealant layer.

After manufacturing, all the films of Table 2 were wound in rolls and the rolls were stored for two weeks before being unwounded and tested.

### Sticking of the films

All the films of Examples 1-9 and the C1 and C2 films showed no sticking during manual unwinding of the rolls. C1 and C2 did not show sticking effect because of the presence of oxydry powder. It is worth noting that the films of Examples 2 and 8 did not show any sticking even in the absence of antiblocking agent in the outermost (skin) layer.

On the contrary, the comparative film C3, in which oxydry was not added, proved difficult to unroll, the sealing layer of the film remaining attached to the outer layer of the film in the next loop. Upon increasing the applied force, upon unwinding, breakage of the inner structure of the film was observed.

### VSP packages

Vacuum skin packages where films of examples 1, 3, 4, 5, 6, 7 and 8 were used as bottom films were manufactured with a vacuum skin-packaging machine (Multivac R570CD) at the dome temperature of 210°C. An internal sensor on the skin-packaging machine, that is used to set the heated dome temperature, was used to record the sealing temperature. The equipment had a dome height of 50 mm, and vacuum time was set to 1 sec. The bottom films were thermoformed inline and bottom dimensions were 250 mm long x 135 mm wide x 5 mm deep.

The top film sealed onto the thermoformed bottom films of Examples 1, 8 and 3-6 is commercially available from Cryovac under the tradename TH300, which is a cross-linked, multilayer film with a LDPE sealant layer, an inner barrier layer of EVOH and a total thickness of 150 microns.

The top film sealed onto the thermoformed bottom films of Example 7 is commercially available from Cryovac under the tradename TH301, which is a cross-linked, multilayer film with an ionomer sealant layer (zinc-neutralized EMAA copolymer), an inner barrier layer of EVOH and a total thickness of 130 microns.

Ninety packages were manufacture for each of films 1 and 3-8. The packaged product was a wet pad of 75 mm x 150 mm Dry-Loc pad by Cryovac.

### Machinability and formability

All the rolls made of films of Examples 1 and 3-8 showed a good machinability on the skin-packaging machine (Multivac R570CD): no sticking between the spires of the wound material was observed. In addition, all the film rolls run well on the packaging machine, and no issues raised during pinching, pre-cutting or cutting were detected, for any of the tested films.

All the films rolls of Examples 1 and 3-9 also showed good formability in inline thermoforming to provide trays. Thermoforming proceeded smoothly, similarly to standard, commercial bottom materials.

### Opening of the packages

Opening of the packages manufactured with the films of Ex. 1 and 3-8 was evaluated after storage of the packages at 4°C for 24 hours.

Twenty packages prepared as described above, for each film of Examples 1 and 3-8 used as bottom webs, were manually opened by two panelists to visually evaluate easy openability, appearance and possible delamination of the bottom web structure at the pre-cut area of the opened packages.

The appearance of the opened packages was ranked well, as all the films showed smooth and homogeneous opening and fringes were never detected. No delamination was noticed on the pre-cut area while opening the packages for any of the tested films.

The opening force, for the packages prepared from the film of Examples 1 and 3-7, used as bottom webs, was measured according to the following internal standard procedure.

After removal of the product from the packages, strips including a top web sealed to the corresponding bottom web were cut out from each VSP package prepared as described above. The specimens were obtained from the bottom flat part of the packages, with specimen dimensions of 2.54 cm (1 inch) of width and 15-20 cm of length cut along the machine direction (namely along the direction of unwinding of the roll). Twelve strips for each package were prepared and tested. The packaged product was placed off centered onto one-half of the bottom, the other half being used to cut the specimens for measurement of the opening force.

The strips were manually separated in order to provide detached top web and bottom web portions sufficient to be fixed into the lower clamp and into the upper clamp of a dynamometer respectively. The area to be tested lied in the middle of the two clamps, and an adequate tensioning between the two extremities of the fixed sample was obtained.

Dynamometer conditions were:
- equipment: Instron
- starting jaw distance: 2 cm
- crosshead speed: 300 mm/min,
- seal width: 5 cm.

The instrument measured the force needed to separate the top web from the bottom web and calculated the average force applied for the opening of 5 cm of the seal for each sample (gf/2.54 cm). Finally, the seal strength - i.e. the average force value out of the 12 samples tested for each film - was calculated and reported in the following Table 3:

**Table 3**

| Film used as bottom web | seal strength (average force) (g/2.54 cm) | Top film |
|---|---|---|
| Ex. 1 | 251 | TH300 as top layer |
| Ex. 3 | 268 | |
| Ex. 4 | 281 | |
| Ex. 5 | 240 | |
| Ex. 6 | 253 | |
| Ex. 7 | 382 | TH301 as top layer |

The seal strength values resulted perfectly in line with the desired range indicated herein for an EZO package.

### Drip loss

A drip loss test was performed on some VSP packages manufactured as previously described, said packages including the films of Ex.1 and Ex. 8 as bottom webs and TH300 as top web. Six red meat cuts (300 g each) were vacuum skin packaged using a Multivac R570CD machine under the same conditions described above: three packages used the film of Ex 1 as bottom web, the other three used the film of Ex. 8 as bottom web. The packages were stored in refrigerator for three weeks at 4°C in vertical position on a display. After three weeks, the packages were visually checked by two panelists and no drip loss was observed, as there was no visible meat purge in the packages around the meat cuts.

### Sticking of the rolls after press

A roll of the film of Ex. 2 and a roll of the C1 film underwent a load test at the following conditions: the two rolls, having the same dimensions, were accommodated on a metal casing one close to the other, and a mass (1600 kg) was placed on top of the two rolls to increase the pressure among the spires of the rolls. The loaded rolls were stored in a warehouse for two weeks before checking the performance at unrolling through a slitting DCM-ATM equipment at different unrolling speeds: 20, 40, 80 mt/min.

No sticking or delamination was observed for both the rolls.

In conclusion, the roll according to the invention showed no sticking, similarly to the comparative roll of film C1, even in absence of anti-sticking powders between the spires.

### Accelerated sticking test: manual opening and Static Coefficient Of Friction

The rolls of Ex C1, Ex. C3, Ex 3 and Ex. 7 (rolls of about 150 m of film) were submitted to heat treatment in an oven for three days, each day at a different increased temperature: 50°C (first day), 60°C (second day), 70°C (third day) to reproduce challenging storing conditions thus maximizing the sticking effect, if any.

Ten spires, for each roll, were manually unwound by two panelists that judged if sticking occurred or not. Evident sticking was noticed at unwinding the roll of Ex. C3, while the other three films did not show any sticking issue.

From the same rolls, fresh samples were cut to measure the static coefficient of friction (COF) between the outer layer (OUT) and the sealant layer (IN) of each of the four heat-treated samples. The test method of ASTM D-1894 was followed for the evaluation of the static COF, with the following modification.

A cut sample for each film was positioned on the bottom plane of the dynamometer, with the sealant side in contact with the metal bottom fixed plane and the outer layer (OUT) facing the air; another piece of the same film was cut and fixed around the upper moving sled with the sealant layer (IN) exposed to air. The method of the ASTM was then followed putting into contact the two films (the sealant layer in contact with the outer layer). Before starting the test (i.e. allowing the upper sled with the IN side sliding onto the OUT side mounted on the bottom plane), a weight of 2 kg was used to press the two surfaces one onto the other for 1 minute. The films specimens were cut along the machine direction (MD), therefore the sliding of the two films occurred in the same direction (the MD of the cut films was parallel to the length of the sled and of the plane). The results are reported in Table 4.

**Table 4**

| Static coefficient of friction | Example C1 (with oxydry on the sealant layer) | Example C3 (with no oxydry) | Example 3 | Example 7 |
|---|---|---|---|---|
| Average value | 0.285 | 13.928 | 5.764 | 6.440 |
| Standard deviation (S.D.) | 0.076 | 3.453 | 1.250 | 0.791 |

The static coefficient of friction (COF) has been selected to quantify the sticking of the sealant layer to the outer layer.

As it can be clearly seen from the results shown in Table 4, this parameter is able to highlight the differences among the samples:
- the film of Example C1, having oxydry on its sealant layer, showed a very low value of static COF while the static COF of the comparative film deprived of oxydry of Example C3 was significantly higher than those of all the other tested films;
- the films of Examples 3 and 7 showed average COF values lower than that of the comparative film of Example C3;
- the standard deviation of the tests on films of Ex. 3 and 7 is quite low and significantly lower than the S.D. of the test on the comparative film of Example C3, confirming the reproducible and good behavior at unwinding of the films of the invention from the roll.

In conclusion, the film according to the invention, thanks to the composition of the sealant layer and the rigidity conferred by the high content of certain resins, has proved to be stable and not subjected to internal rupture when unwound from reels, even in complete absence of anti-sticking agents. Advantageously, it is possible to avoid the classic final treatment of the films with anti-sticking powders, thus avoiding all the problems associated with their use - such as, for instance, difficulties in dosing and uniform application, machine contamination, possible toxicity for operators, machinability problems, reel stability - while maintaining the excellent performance of easy opening of the packages manufactured therefrom.

## Claims

1. A multilayer film for packaging, which comprises
1) a first outer sealant layer, consisting essentially of
- from 10 to 100 wt% of at least an ethylene polymer, at least a propylene polymer or a mixture thereof,
- from 0 to 90 wt% of at least an ethylene (meth)acrylate copolymer, at least an ethylene (meth)acrylic acid copolymer or a mixture thereof, all the weight percentages being referred to the weight of the first outer sealant layer;
2) an inner frangible layer consisting of a frangible polymer blend,
3) a second outer layer comprising at least 80 wt% of at least a stiff polymer, wherein the stiff polymer is a thermoplastic polymer **characterized by** a flexural modulus at 23°C of at least 1.5 GPa measured according to ASTM D790, and
optionally, one or more further inner layers,
wherein the total thickness of the layer(s) of the film comprising said at least a stiff polymer, is at least 60% of the total thickness of the film.

2. The film of claim 1 wherein the outer sealant layer 1) consists essentially of
- from 15 to 95 wt.%, preferably from 20 to 90 wt.%, more preferably from 25 to 80 wt.%, even more preferably from 30 to 75 wt.% or from 40 to 60 wt% of at least one ethylene polymer, or at least one propylene polymer, or a mixture thereof, and
- from 5 to 85 wt.%, preferably from 10 to 80 wt.%, more preferably from 20 to 75 wt.%, even more preferably from 25 to 70 wt.% or from 40 to 60 wt% of one or more copolymers of ethylene with (meth)acrylate and/or /with (meth)acrylic acid.

3. The film of claims 1 or 2 wherein said frangible polymer blend is a binary blend comprising
(i) an ethylene and acrylic acid or methacrylic acid copolymer and (ii) a modified EVA copolymer,
(i) an ethylene and acrylic acid or methacrylic acid copolymer and (iii) a polybutylene, or
(ii) an ethylene homo or copolymer or an EVA copolymer and (iii) a polybutylene.

4. The film of claims 1 or 2 wherein said frangible polymer blend is a ternary blend comprising
(i) a copolymer of ethylene and acrylic acid or methacrylic acid,
(ii) a modified EVA copolymer, and
(iii) a polybutylene.

5. The films of any one of claims 1 to 4 wherein the outer layer 3) comprises at least 85%, more preferably at least 90 wt%, even more preferably at least 95 wt% or at least 98 wt% of at least a stiff polymer.

6. The films of any one of claims 1 to 5 wherein said stiff polymer is selected from the group consisting of polyesters, styrene-based polymers, cyclo-olefin copolymers, poly-lactic acids and mixtures thereof.

7. The films of any one of claims 1 to 6 wherein the stiff polymer is **characterized by** a flexural modulus at 23°C from 1.5 GPa to 3.5 GPa, preferably from 2.0 GPa to 3.0 GPa measured according to ASTM D790.

8. The film of any one of claims 1 to 7 wherein said stiff polymer is a polyester or an admixture of polyesters.

9. The film of any one of claims 1 to 8 wherein the thickness of the second outer layer 3) is at least 45%, preferably at least 65%, more preferably at least 80% of the total thickness of the film.

10. The film of any one of claims 1 to 9 wherein the total thickness of the layer(s) comprising at least a stiff polymer is at least 70%, preferably at least 80% of the total thickness of the film.

11. The film of any one of claims 1 to 10 wherein the total thickness of the film is at least 100 microns, preferably at least 150 microns, more preferably at least 180 microns, even more preferably at least 200 microns.

12. The film of any one of claims 1 to 11 wherein anti-sticking powder(s) may be present onto the outer surfaces but in amount lower than 0.08 g/m², preferably lower than 0.06 g/m², more preferably lower than 0.04 g/m², even more preferably anti-sticking powder(s) are not present.

13. The film of any one of claims 1 to 12 wherein the film is fully coextruded.

14. The film of any one of claim 1 to 13 wherein said film is suitable for use as bottom web in vacuum skin packaging.

15. A roll made of the multilayer film of any one of claims 1 to 14.

16. The roll of claim 15 wherein anti-sticking powder(s) may be present, between the outer sealant layer of the film in a first spire and the outer layer of the film in the next spire, in amount lower than 0.8 g/m², preferably lower than 0.6 g/m², more preferably lower than 0.4 g/m², even more preferably anti-sticking powder(s) are not present.

17. A thermoformed support comprising, preferably consisting of, the multilayer film of any one of claims 1 to 14 wherein the sealant layer of said film is the internal surface of the support.

18. A vacuum skin package comprising a bottom web a top web sealed to the sealant layer of the bottom web and a product, preferably a food product, enclosed between said top and bottom webs, **characterized in that** the bottom web comprises, preferably consists of, the multilayer film of any one of claims 1 to 14.

19. The package of claim 18 wherein the top web comprises an outer sealant layer comprising a polymer selected from the group consisting of neutralized ethylene/(meth)acrylic acid copolymers, LDPE, ethylene/alpha-olefin copolymers and ethylene/vinyl acetate copolymers.

20. Use of a film of any one of claims 1 to 14 as a bottom web for manufacturing a vacuum skin package.
